(19)

**Europäisches Patentamt**

**European Patent Office**

**Office européen des brevets**

(11) **EP 4 778 886 A1**

(12) **EUROPEAN PATENT APPLICATION**

(43) Date of publication:
**22.07.2026 Bulletin 2026/30**

(21) Application number: **26152135.5**

(22) Date of filing: **15.01.2026**

(51) International Patent Classification (IPC):
$C01B\ 32/20^{(2017.01)}$   $C01B\ 32/205^{(2017.01)}$
$C01B\ 32/215^{(2017.01)}$   $H01M\ 4/133^{(2010.01)}$
$H01M\ 4/583^{(2010.01)}$   $C01B\ 32/21^{(2017.01)}$

(52) Cooperative Patent Classification (CPC):
**C01B 32/215; C01B 32/20; C01B 32/205;**
**C01B 32/21; H01M 4/133; H01M 4/583;** Y02E 60/10

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **15.01.2025   CN 202510063774**

(71) Applicant: **Xiamen Hithium Energy Storage**
**Technology Co., Ltd.**
**Xiamen, Fujian 361100 (CN)**

(72) Inventors:
• **MO, Fei**
  **361100 Xiamen (CN)**
• **HE, Lihong**
  **361100 Xiamen (CN)**
• **ZHANG, Qin**
  **361100 Xiamen (CN)**

(74) Representative: **DREISS Patentanwälte PartG**
  **mbB**
  **Friedrichstraße 6**
  **70174 Stuttgart (DE)**

(54) **GRAPHITE AND PREPARATION METHOD THEREOF, NEGATIVE ELECTRODE PLATE, SECONDARY BATTERY, AND ENERGY STORAGE DEVICE**

(57)   The present disclosure relates to the technical field of batteries, and more particularly, to a graphite and a preparation method thereof, a negative electrode plate, a secondary battery, and an energy storage device. The graphite has a first structural stability coefficient X1. The first structural stability coefficient X1 satisfies X1=(Dv90-Dv50)/(Dv90'-Dv50'), and 0.90≤X1≤1.80, where: Dv90 represents a particle size value prior to roller pressing at which 90% volume of particles of the graphite are smaller; Dv50 represents a particle size value prior to the roller pressing at which 50% volume of the particles of the graphite are smaller; Dv90' represents a particle size value subsequent to the roller pressing at which 90% volume of the particles of the graphite are smaller; and Dv50' represents a particle size value subsequent to the roller pressing at which 50% volume of the particles of the graphite are smaller.

**EP 4 778 886 A1**

**Description**

**FIELD**

The present disclosure relates to the technical field of batteries, and more particularly, to a graphite and a preparation method thereof, a negative electrode plate, a secondary battery, and an energy storage device.

**BACKGROUND**

Graphite, as a critical negative electrode active material, is widely used in the battery field. As the market demand for long cycling performance of batteries continues to increase, particle stability of the graphite has attracted considerable attention. However, during the preparation of an electrode plate where the graphite serves as the negative electrode active material, a roller pressing operation imposes relatively stringent requirements on a structural stability level of the graphite. Therefore, it is necessary to provide a graphite whose structural stability level is more compatible with requirements of the roller pressing operation, to mitigate conditions such as deteriorated stability of the graphite subsequent to the roller pressing and structural damage to the graphite during cycling, which would otherwise affect various performance aspects of the batteries.

**SUMMARY**

To address the aforementioned technical problems, embodiments of the present disclosure provide a graphite and a preparation method thereof, a negative electrode plate, a secondary battery, and an energy storage device.

In a first aspect, the present disclosure provides a graphite. The graphite has a first structural stability coefficient $X1$. The first structural stability coefficient $X1$ satisfies $X1=(Dv90-Dv50)/(Dv90'-Dv50')$, and $0.90 \leq X1 \leq 1.80$, where: $Dv90$ represents a particle size value prior to roller pressing at which 90% volume of particles of the graphite are smaller; $Dv50$ represents a particle size value prior to the roller pressing at which 50% volume of the particles of the graphite are smaller; $Dv90'$ represents a particle size value subsequent to the roller pressing at which 90% volume of the particles of the graphite are smaller; and $Dv50'$ represents a particle size value subsequent to the roller pressing at which 50% volume of the particles of the graphite are smaller.

Further, the roller pressing is performed by applying a pressure ranging from 800 MPa to 1,500 MPa on the graphite at a rotation speed ranging from 10 m/min to 40 m/min.

Further, the graphite has a compaction density ranging from 1.50 g/cm$^3$ to 1.90 g/cm$^3$.

Further, $17 \ \mu m \leq Dv90 \leq 26 \ \mu m$.

Further, $10 \ \mu m \leq Dv50 \leq 15.5 \ \mu m$.

Further, $17 \ \mu m \leq Dv90' \leq 25 \ \mu m$.

Further, $9.5 \ \mu m \leq Dv50' \leq 15 \ \mu m$.

Further, the graphite further has a second structural stability coefficient $X2$. The second structural stability coefficient $X2$ satisfies $X2=(Dv90-Dv10)/(Dv90'-Dv10')$, and $0.95 \leq X2 \leq 2$, where: $Dv10$ represents a particle size corresponding to a 10% cumulative volume of the graphite prior to the roller pressing; and $Dv10'$ represents a particle size corresponding to a 10% cumulative volume of the graphite subsequent to the roller pressing.

Further, $5 \ \mu m \leq Dv10 \leq 9.5 \ \mu m$.

Further, $4 \ \mu m \leq Dv10' \leq 7.5 \ \mu m$.

Further, the graphite has a tap density ranging from 1.0 g/cm$^3$ to 1.2 g/cm$^3$.

Further, the graphite has a specific surface area ranging from 1.1 m$^2$/g to 1.6 m$^2$/g.

Further, the graphite has a gram capacity ranging from 340 mAh/g to 370 mAh/g.

In a second aspect, the present disclosure provides a method for preparing the graphite according to the first aspect of the present disclosure. The method includes: crushing raw coke to obtain an aggregate, wherein the aggregate has a volume median particle size $Dv0$ ranging from 6.0 $\mu m$ to 9.0 $\mu m$; performing granulation on the aggregate to obtain a first material, wherein the first material has a first volume median particle size $Dv1$ satisfying $1.7 \leq Dv1/Dv0 \leq 2.6$; shaping the first material to obtain a second material, wherein the second material has a second volume median particle size $Dv2$ satisfying $1.5 \leq Dv2/Dv0 \leq 1.8$; performing pre-carbonization on the second material to obtain a third material; performing graphitization on the third material to obtain a fourth material; and sieving the fourth material to obtain the graphite.

Further, $Dv1$ ranges from 10.0 $\mu m$ to 22.0 $\mu m$.

Further, $Dv2$ ranges from 11.0 $\mu m$ to 16.0 $\mu m$.

Further, the second material has a tap density greater than or equal to 0.5 g/cm$^3$.

Further, the third material has a tap density greater than or equal to 0.7 g/cm$^3$.

Further, the fourth material has a tap density greater than or equal to 0.8 g/cm$^3$.

In a third aspect, the present disclosure provides a negative electrode plate. The negative electrode plate includes a negative electrode current collector and a negative electrode active material layer. The negative electrode active material layer is disposed on at least one surface of the negative electrode current collector. The negative electrode active material layer includes the graphite according to the first aspect of the present disclosure or the graphite prepared by the method according to the second aspect of the present disclosure.

In a fourth aspect, the present disclosure provides a secondary battery. The secondary battery includes a positive electrode plate, the negative electrode plate according to the third aspect of the present disclosure, a separator, and an electrolyte. The separator is disposed between the positive electrode plate and the negative electrode plate to form a cell. The electrolyte is injected in the cell.

Further, the electrolyte includes a lithium salt, an organic solvent, and an additive. The additive includes a sulfonate compound. A mass fraction W of the sulfonate compound in the electrolyte satisfies $0.2\% \leq W/X1 \leq 1.0\%$.

In a fifth aspect, the present disclosure provides an energy storage device. The energy storage device includes the secondary battery according to the fourth aspect of the present disclosure.

Compared with the related art, beneficial effects of the present disclosure are as follows.

The graphite of the present disclosure has the first structural stability coefficient X1 ranging from 0.90 to 1.80. Therefore, the graphite can exhibit an excellent overall structural stability level, which can thus be compatible with requirements of a roller pressing operation on the graphite to ensure that the graphite subsequent to the roller pressing retains a suitable structural stability level. As a result, the properties of the graphite can ensure that the battery has long cycling performance and safety performance.

## BRIEF DESCRIPTION OF THE DRAWINGS

In order to clearly explain technical solutions of embodiments of the present disclosure or in the related art, drawings used in description of the embodiments or the related art will be briefly described below. The drawings described below merely illustrate some embodiments of the present disclosure. Based on these drawings, other drawings can be obtained by those skilled in the art without creative effort.

FIG. 1 is a schematic structural view of a residential energy storage system according to an embodiment of the present disclosure.

FIG. 2 is a schematic structural view of a commercial energy storage system according to an embodiment of the present disclosure.

Reference numerals: 100, energy storage system; 101, residential energy storage system; 102, commercial energy storage system; 10, energy storage device; 20, power conversion device; 30, first user load; 40, second user load; 50, high-voltage cable; 60, first power conversion device; 70, second power conversion device.

## DETAILED DESCRIPTION OF THE EMBODIMENTS

In the present disclosure, terms such as "on", "below", "left", "right", "front", "back", "top", "bottom", "in", "out", "middle", "vertical", "horizontal", "transverse", "longitudinal", etc., is based on the orientation or position relationship shown in the drawings, and is only for the convenience of describing the present disclosure and the embodiments of the present disclosure, rather than indicating or implying that the associated device, element, or component must have a specific orientation, or be constructed and operated in a specific orientation.

Moreover, some of the above-mentioned terms may be used to indicate other meanings than the orientation or position relationship, for example, the term "on" may also be used in some cases to indicate some kind of dependency or connection. The specific meanings of these terms in the present disclosure will be understood by those skilled in the art as appropriate.

In addition, terms "installed", "disposed", "provided", "connected", and "coupled" are understood broadly. For example, it may be fixed connection, detachable connection, or integrated configuration; may be mechanical connection or electrical connection; may be direct connection or indirect connection via media; or may be inner communication between two devices, elements, or components, which can be understood by those skilled in the art according to the detail embodiment of the present disclosure.

In addition, terms such as "first" and "second", etc., may be used primarily herein to distinguish between different devices, elements or components (specific types and configurations may be the same or not) and are not used to indicate or imply relative importance and the number of the indicated devices, elements or components. Unless otherwise indicated, "plurality of" means two or more.

Technical solutions of the present disclosure will be further described below with reference to the embodiments.

For secondary batteries, increasing a compaction density of active materials can advantageously enhance an endurance capability of the batteries. However, this is a difficult task to overcome in practical production.

Graphite, a critical active material, is described as an example. To increase a compaction density of the graphite, a higher and more stringent compaction condition is required. However, such an elevated compaction condition in turn can adversely affect a structural stability level of the active material, resulting in structural damage to the active material despite greater compactness thereof, thereby adversely affecting other key properties of the active material.

Although studying a change in a volume median particle size of the graphite prior to and subsequent to powder pressing can reflect its stability level prior to and subsequent to the powder pressing to some extent, such a graphite stability level cannot adequately satisfy a stability level prior to and subsequent to roller pressing. On the one hand, when a powder pressing operation is performed on the graphite, except for a pressure applied during the powder pressing, the graphite is in a static state rather than a moving state. However, when a roller pressing operation is performed on the graphite, in addition to the pressure applied to the graphite by a roller, the graphite may undergo displacement as the roller rotates. That is, the powder pressing essentially differs from the roller pressing in that for the graphite prior to and subsequent to the roller pressing, a combined effect of the pressure and a dynamic displacement on the structural stability needs to be considered. However, for the graphite prior to and subsequent to the powder pressing, only the effect of the pressure on the structural stability needs to be considered. Consequently, stresses experienced by the graphite are different under the two operations. On the other hand, when the powder pressing operation is performed on the graphite, some stress is typically pre-released, and then a pressure is applied to the graphite. However, when the roller pressing operation is performed on the graphite, extrusion force is directly applied to the graphite instead of the pre-release of the stress experienced by the graphite. In this way, the roller pressing operation imposes higher demands on the structural stability of the graphite.

Therefore, a more stringent requirement is placed on the structural stability level of the graphite in the roller pressing operation. The graphite having excellent structural stability subsequent to the powder pressing cannot guarantee retention of such excellent structural stability subsequent to the roller pressing. Subsequent to the roller pressing, a phenomenon such as structural damage to the graphite may still occur.

Based on in-depth analysis of the above-mentioned problems and creative effort, embodiments of the present disclosure provide a graphite and a preparation method thereof, a negative electrode plate, a secondary battery, and an energy storage device. Such a graphite has a more suitable structural stability level and can better meet the requirements of the roller pressing operation.

In a first aspect, embodiments of the present disclosure provide a graphite. The graphite has a first structural stability coefficient X1. The first structural stability coefficient X1 satisfies $X1=(Dv90-Dv50)/(Dv90'-Dv50')$, and $0.90 \leq X1 \leq 1.80$, where: Dv90 represents a particle size value prior to roller pressing at which 90% volume of particles of the graphite are smaller; Dv50 represents a particle size value prior to the roller pressing at which 50% volume of the particles of the graphite are smaller; Dv90' represents a particle size value subsequent to the roller pressing at which 90% volume of the particles of the graphite are smaller; and Dv50' represents a particle size value subsequent to the roller pressing at which 50% volume of the particles of the graphite are smaller.

The graphite that satisfies the above-mentioned range of the first structural stability coefficient X1 has an excellent overall structural stability level, which can therefore be compatible with the requirements of the roller pressing operation on the graphite, ensuring that the graphite still has a suitable structural stability level subsequent to the roller pressing. Thus, the properties of the graphite can meet requirements of the battery for long cycling performance while ensuring that the battery has excellent safety performance.

The first structural stability coefficient X1 ranges from 0.9 to 1.8, indicating that the graphite does not undergo significant structural fragmentation subsequent to the roller pressing. In this way, it is advantageously ensured that a battery composed of electrode plates using such a graphite can exhibit long cycling performance and maintain a relatively high capacity retention rate after a large number of repeated charge and discharge cycles. Further, it also indicates that the graphite still undergoes a certain degree of particle size reduction subsequent to the roller pressing, without a negligible change in the volume median particle size caused by an excessively high particle strength of the graphite. In this way, a volume expansion phenomenon of the battery composed of the electrode plates using such a graphite during charge and discharge can be mitigated, thereby reducing stress generated inside the battery. As a result, cycling performance and safety of the battery can be advantageously ensured. In summary, since the structural stability level of the graphite according to the embodiments of the present disclosure can be better compatible with the roller pressing operation, the battery can exhibit excellent safety performance while providing a longer cycle service life.

In particular, when the graphite includes secondary particles aggregated by primary particles, the first structural stability coefficient X1 of the graphite ranges from 0.9 to 1.8, indicating that subsequent to the roller pressing, neither does structural damage occur to a large number of graphite particles, nor are a large number of secondary particles dispersed into finer primary particles. Therefore, structural rigidity and stability of the graphite prior to and subsequent to the roller pressing meet the requirements of the roller pressing.

Furthermore, as mentioned above, compared with the static powder pressing which only needs to withstand the stress caused by compressive deformation, the graphite according to the embodiments of the present disclosure is in a dynamic process during the roller pressing, which needs to withstand the stress from both displacement and deformation.

Therefore, when the first structural stability coefficient X1 prior to and subsequent to the roller pressing ranges from 0.9 to 1.8, the graphite can exhibit stability that is more compatible with the roller pressing operation. In addition, compared with a ratio of a volume median particle size prior to the roller pressing to a volume median particle size subsequent to the roller pressing, a ratio of a particle size difference between the 90% cumulative volume and the 50% cumulative volume prior to the roller pressing to a particle size difference between the 90% cumulative volume and the 50% cumulative volume subsequent to the roller pressing can not only reflect a volume distribution width of the graphite including medium particles and large particles, but also reflect a change in small particles of the graphite, indirectly reflecting change degrees of a pore structure and a packing degree of the graphite particles prior to and subsequent to the roller pressing. Thus, the ratio of the particle size difference prior to the roller pressing to the particle size difference subsequent to the roller pressing can more comprehensively reflect a change degree of the graphite particles under the stress effect of the dual factors in terms of the displacement and the deformation prior to and subsequent to the roller pressing, thereby ensuring that the graphite with the first structural stability coefficient X1 ranging from 0.9 to 1.8 has an excellent overall structural stability level under the roller pressing condition.

It should be noted that the roller pressing refers to an operation of using equipment such as a roller pressing machine to feed a material between extrusion rollers of the roller pressing machine and applying a pressure to extrude the material. During the roller pressing, the material undergoes deformation due to the pressure of the extrusion rollers and moves as the extrusion rollers rotate. Therefore, the material is in a dynamic process when the roller pressing operation is performed, and the material is subjected to the stress from both the deformation and the displacement. In contrast, the powder pressing merely involves applying the pressure to the material, during which the material only withstand the stress caused by the deformation without being affected by the displacement. Overall, when a structural stability coefficient of the graphite prior to and subsequent to the roller pressing falls within the range of the first structural stability coefficient X1 mentioned above, the graphite can exhibit a better overall structural stability level that is more compatible with the roller pressing operation.

Further, the roller pressing is performed by applying a pressure ranging from 800 MPa to 1,500 MPa on the graphite at a rotation speed ranging from 10 m/min to 40 m/min. The rotation speed in the roller pressing operation ranging from 10 m/min to 40 m/min includes any point value within this rotation speed range. For example, the rotation speed in the roller pressing operation is 10 m/min, 15 m/min, 20 m/min, 25 m/min, 30 m/min, 35 m/min, or 40 m/min. The pressure of the roller pressing ranging from 800 MPa to 1,500 MPa includes any point value within this pressure range. For example, the pressure of the roller pressing is 800 MPa, 900 MPa, 1,000 MPa, 1,200 MPa, 1,300 MPa, or 1,500 MPa.

Further, the graphite has a compaction density ranging from 1.50 $g/cm^3$ to 1.90 $g/cm^3$. The compaction density of the graphite ranging from 1.50 $g/cm^3$ to 1.90 $g/cm^3$ includes any point value within this range. For example, the compaction density of the graphite is 1.50 $g/cm^3$, 1.55 $g/cm^3$, 1.60 $g/cm^3$, 1.65 $g/cm^3$, 1.70 $g/cm^3$, 1.75 $g/cm^3$, 1.80 $g/cm^3$, 1.85 $g/cm^3$, or 1.90 $g/cm^3$.

The above-mentioned conditions for the roller pressing are high-pressure condition. Such high-pressure conditions can be favorable for the graphite to obtain a relatively high compaction density, but also impose high demands on the structural stability level of the graphite prior to and subsequent to the roller pressing. Under such roller pressing conditions, the graphite with an excessively low structural strength is likely to fracture subsequent to the roller pressing, thereby affecting the compaction density of the graphite and a service life of the electrode plates during the charge and discharge, which in turn affects the cycling performance of the battery. The graphite with an excessively high structural strength is likely to undergo significant volume expansion, generating greater stress inside the battery, which in turn deteriorates the cycling performance and safety performance of the battery. The graphite according to the embodiments of the present disclosure can adapt to the above-mentioned high-pressure conditions due to its first structural stability coefficient X1 ranging from 0.9 to 1.8. Thus, when the graphite subsequent to the roller pressing is used as an active material, it is favorable for the battery using such a graphite to obtain a high level of compaction density, for example, 1.50 $g/cm^3$ to 1.90 $g/cm^3$, while also ensuring excellent cycling performance and safety performance of the battery.

Further, the graphite further has a second structural stability coefficient X2. The second structural stability coefficient X2 satisfies X2=(Dv90-Dv10)/(Dv90'-Dv10'), and 0.95≤X2≤2, where: Dv10 represents a particle size value prior to the roller pressing at which 10% volume of the particles of the graphite are smaller; and Dv10' represents a particle size value subsequent to the roller pressing at which 10% volume of the particles of the graphite are smaller.

When the graphite has the second structural stability coefficient within the above-mentioned range, high-temperature cycling performance of the battery composed of the electrode plates using such a graphite can be further improved. The graphite according to the embodiments of the present disclosure satisfies both the first structural stability coefficient X1 and the second structural stability coefficient X2. As a result, its particle structure not only has structural stability and rigidity that is compatible with the roller pressing operation but also exhibits good gradation gradient among large particles, medium particles, and small particles. In this way, the graphite has a suitable pore space and particle packing degree, as well as a uniform particle distribution. Thus, the graphite can meet both the requirement of the high compaction density and the cycling performance under the high-temperature condition.

Further, 17 $\mu$m≤Dv90≤26 $\mu$m.

Further, 10 $\mu$m≤Dv50≤15.5 $\mu$m.

Further, 17 $\mu$m≤Dv90'≤25 $\mu$m.

Further, 9.5 $\mu$m≤Dv50'≤15 $\mu$m.

Further,5 $\mu$m≤Dv10≤ 9.5 $\mu$m.

Further, 4 $\mu$m≤Dv10'≤7.5 $\mu$m.

By further controlling the particle size prior to and subsequent to the roller pressing within the above-mentioned range, the ranges of the structural stability coefficient X1 and the structural stability coefficient X2 can be better satisfied, resulting in superior overall structural stability and high-temperature cycling performance of the graphite.

Further, the graphite has a tap density ranging from 1.0 g/cm$^3$ to 1.2 g/cm$^3$. The tap density of the graphite ranging from 1.0 g/cm$^3$ to 1.2 g/cm$^3$ includes any point value within this range. For example, the tap density of the graphite is 1.0 g/cm$^3$, 1.02 g/cm$^3$, 1.05 g/cm$^3$, 1.08 g/cm$^3$, 1.1 g/cm$^3$, 1.12 g/cm$^3$, 1.15 g/cm$^3$, 1.18 g/cm$^3$, or 1.2 g/cm$^3$.

Further, the graphite has a specific surface area ranging from 1.1 m$^2$/g to 1.6 m$^2$/g. The specific surface area of the graphite ranging from 1.1 m$^2$/g to 1.6 m$^2$/g includes any point value within this range. For example, the specific surface area of graphite is 1.1 m$^2$/g, 1.2 m$^2$/g, 1.3 m$^2$/g, 1.4 m$^2$/g, 1.5 m$^2$/g, or 1.6 m$^2$/g.

Further, the graphite has a gram capacity ranging from 340 mAh/g to 370 mAh/g. The gram capacity of the graphite ranging from 340 mAh/g to 370 mAh/g includes any point value within this range. For example, the gram capacity of the graphite is 340 mAh/g, 345 mAh/g, 350 mAh/g, 355 mAh/g, 360 mAh/g, 365 mAh/g, or 370 mAh/g. The graphite with the above-mentioned gram capacity level, when applied in electrodes and assembled into batteries, can advantageously improve a capacity level of the battery. In addition, when the compaction density of the graphite is at a high level, for example, ranging from 1.50 g/cm$^3$ to 1.90 g/cm$^3$, the graphite at the above-mentioned gram capacity level can advantageously improve an energy density and endurance capability of the battery.

In a second aspect, embodiments of the present disclosure provide a method for preparing the graphite according to the first aspect of the present disclosure. The method includes: crushing raw coke to obtain an aggregate, wherein the aggregate has a volume median particle size Dv0 ranging from 6.0 $\mu$m to 9.0 $\mu$m; performing granulation on the aggregate to obtain a first material, wherein the first material has a first volume median particle size Dv1 satisfying 1.7≤Dv1/Dv0≤2.6; shaping the first material to obtain a second material, wherein the second material has a second volume median particle size Dv2 satisfying 1.5≤Dv2/Dv0≤1.8; performing pre-carbonization on the second material to obtain a third material; performing graphitization on the third material to obtain a fourth material, wherein the fourth material has a tap density greater than or equal to 0.8 g/cm$^3$; and sieving the fourth material to obtain the graphite.

The volume median particle size Dv of each of the materials refers to a particle size value at which 50% volume of the particles of the material are smaller. The volume median particle size Dv0 of the aggregate is described as an example. Dv0 refers to a particle size value at which 50% volume of the particles of the aggregate are smaller. Dv1 refers to a particle size value at which 50% volume of the particles of the first material are smaller. Dv2 refers to a particle size value at which 50% volume of the particles of the second material are smaller.

By adopting the above-mentioned sequence of the process steps while controlling the volume median particle size of the aggregate, the ratio of the volume median particle size of the material before the plurality of treatment steps to the volume median particle size of the material after the plurality of treatment steps, and the tap density within the above-mentioned ranges, the particle size and structural stability level of the materials obtained in each step can be more accurately controlled. Thus, the graphite finally obtained meets the requirement that the first structural stability coefficient X1 thereof ranges from 0.9 to 1.8.

By controlling Dv0 of the aggregate obtained by crushing to range from 6.0 $\mu$m to 9.0 $\mu$m, such a volume median particle size of the aggregate can serve as a reference standard for particle size, primarily exerting two aspects of effects on subsequent operations. On the one hand, a self-adhesion ability of material particles can be advantageously enhanced, assisting in achieving an excellent granulation effect in the subsequent granulation step. Therefore, it is possible to obtain a third material with a suitable volume median particle size range and relatively strong adhesion without adding excessive asphalt in the granulation step to improve adhesion, and thus avoiding an adverse effect on processing performance of the graphite and the high-temperature cycling performance of the battery caused by the addition of the excessive asphalt. On the other hand, a degree of consumption of a lithium source by the graphite can be advantageously balanced, preventing the secondary particles formed after the granulation from being obtained by bonding a large number of primary particles with an excessively small particle size. Thus, excessive consumption of the lithium source by the graphite with such structural characteristics can be prevented during the charge and discharge of the battery, which would otherwise lead to a deterioration of the high-temperature performance of the battery.

Based on this, by further controlling the ratio of the volume median particle size of the material after the granulation to that before the granulation between 1.7 and 2.6, deep granulation of the aggregate can be achieved. Compared with weak granulation, the deep granulation can result in a higher bonding degree and a higher isotropy degree of the secondary particles aggregated by the primary particles. In this way, more directions and channels for intercalation and deintercalation of lithium ions can be provided, thereby improving energy efficiency and dynamics of the graphite. Furthermore, structural stability of the secondary particles can be enhanced. After the granulation, the shaping is performed, and the ratio of the volume median particle size of the shaped material to that of the material before the granulation is controlled between 1.5 and 1.8. In this way, better structural stability of the secondary particles can be promoted, and sharp parts of the secondary particles can be reduced, making a morphology of the secondary particles more rounded. As a result, irreversible lithium consumption can be reduced during a film formation process, advantageously forming a stable Solid Electrolyte Interface, SEI, film, thereby improving overall electrical performance and safety performance of a cell.

In addition, the present disclosure adopts the process sequence of the granulation followed by the shaping. The secondary particles are obtained by the granulation first, allowing the secondary particles to have a suitable first volume median particle size. Then, the secondary particles are shaped to modify their morphology, making the shaped secondary particles more rounded, with a more uniform particle size, less fine powder, and fewer irregularly shaped particles, for example, a flaky, feathery, or angular shape. Further, sphericity of the secondary particles can also be improved, advantageously forming a stable and dense SEI, thereby reducing a SEI fragmentation and recombination phenomenon caused by irregularly shaped tips of the graphite during the cycling. It is possible to first shape the crushed aggregate, and after the morphology is adjusted, the granulation is performed. However, the granulation process may cause aggregate particles to break and an increase in fine powder, and thus failing to stably control a size of the secondary particles in the pre-carbonization step, or necessitating additional second shaping.

Further, Dv1 ranges from 10.0 $\mu$m to 22.0 $\mu$m. Exemplarily, Dv1 is 10.0 $\mu$m, 12.0 $\mu$m, 14.0 $\mu$m, 16.0 $\mu$m, 18.0 $\mu$m, 20.0 $\mu$m, or 22.0 $\mu$m. The granulation step involves the aggregation of the primary particles to form the secondary particles. Aggregates prior to the granulation are classified as the primary particles, and the first material obtained by performing the granulation on these aggregates includes the secondary particles aggregated by the aggregates. Controlling the first volume median particle size Dv1 of the first material within the above-mentioned particle size range can advantageously ensure that the obtained secondary particles have excellent structural stability level and particle size to adapt to subsequent process steps, to obtain a graphite that can meet the requirements of the roller pressing operation.

Further, Dv2 ranges from 11.0 $\mu$m to 16.0 $\mu$m. Exemplarily, Dv2 is 11.0 $\mu$m, 12.0 $\mu$m, 13.0 $\mu$m, 14.0 $\mu$m, 15.0 $\mu$m, or 16.0 $\mu$m.

Further, the second material has a tap density greater than or equal to 0.5 g/cm$^3$. Exemplarily, the tap density of the second material is 0.5 g/cm$^3$, 0.55 g/cm$^3$, 0.58 g/cm$^3$, 0.6 g/cm$^3$, 0.65 g/cm$^3$, or 0.68 g/cm$^3$.

The particle size of the material remains relatively constant or decreases slightly prior to and subsequent to the shaping, but its overall shape becomes more rounded, advantageously improving the tap density.

Further, the third material has a tap density greater than or equal to 0.7 g/cm$^3$. Exemplarily, the tap density of the third material is 0.7 g/cm$^3$, 0.72 g/cm$^3$, 0.74 g/cm$^3$, 0.76 g/cm$^3$, or 0.78 g/cm$^3$.

Further, the fourth material has a tap density greater than or equal to 0.8 g/cm$^3$. Exemplarily, the tap density of the fourth material is 0.8 g/cm$^3$, 0.82 g/cm$^3$, 0.84 g/cm$^3$, 0.86 g/cm$^3$, or 0.88 g/cm$^3$.

By precisely controlling the volume median particle sizes and/or the tap densities of the materials obtained from the above-mentioned steps, it is possible to better ensure that the graphite finally prepared has a structural stability level that is compatible with the requirements of the roller pressing operation.

Further, the step of crushing the raw coke to obtain the aggregate includes: coarsely crushing the raw coke to obtain a coarse material; and finely crushing the coarse material to obtain the aggregate. The coarse material has a volume median particle size Dv0' ranging from 13.0 $\mu$m to 25.0 $\mu$m, satisfying 2.1$\leq$Dv0'/Dv0$\leq$2.8.

By first performing the coarse crushing followed by the fine crushing, and by controlling the volume median particle size of the coarse material to allow a ratio of the volume median particle size of the coarse material to a volume median particle size of the aggregate obtained by the fine crushing to fall within the above-mentioned range, an aggregate with a suitable particle size can be advantageously obtained through more precise control.

In some embodiments of the method for preparing the graphite described above, the graphite may be prepared using the following relevant raw material types or process conditions.

In terms of a raw material, the raw coke according to the embodiments of the present disclosure includes at least one of petroleum coke, pitch coke, or needle coke.

In the step of crushing the raw coke to obtain the aggregate, the raw coke is first ground for 1 hours to 5 hours to obtain the coarse material, and the coarse material is finely crushed at a power ranging from 10 Hz to 50 Hz to obtain the aggregate.

In the step of performing the granulation on the aggregate to obtain the first material, asphalt is used as an additive for the granulation. A softening point of the asphalt ranges from 200°C to 250°C, and an amount of the asphalt ranges from 0.01 wt% to 5 wt%.

In the step of performing the pre-carbonization on the second material to obtain the third material, a temperature of the pre-carbonization treatment ranges from 700°C to 1,500°C, and a duration of the pre-carbonization treatment ranges from 8 hours to 60 hours.

In the step of performing the graphitization on the third material to obtain the fourth material, a power of the graphitization treatment is greater than or equal to 500 kW, a temperature of the graphitization treatment ranges from 2,000°C to 3,500°C, and a thermostatic duration ranges from 12 hours to 24 hours; and a heating process of the graphitization includes at least one of electric arc heating, plasma heating, or resistance heating.

In a third aspect, embodiments of the present disclosure provide a negative electrode plate. The negative electrode plate includes a negative electrode current collector and a negative electrode active material layer disposed on at least one surface of the negative electrode current collector. The negative electrode active material layer includes the graphite according to the first aspect of the present disclosure or the graphite prepared by the method according to the second aspect of the present disclosure.

The negative electrode active material layer may be disposed on one or two surfaces of the negative electrode current collector. In addition to the graphite as the negative electrode active material, the negative electrode active material layer may further include a binder, a conductive agent, a thickener, and the like in a conventional amount as a functional additive, which is not limited in the present disclosure.

The method for preparing the negative electrode plate includes: coating a negative electrode active material layer slurry containing the above-mentioned graphite onto a negative electrode current collector, followed by drying, to obtain a negative electrode plate not subjected to roller pressing; and performing roller pressing on the negative electrode plate not subjected to roller pressing, to obtain the negative electrode plate.

The roller pressing operation may be performed at a set compaction density using a roller pressing machine. For example, a relatively high compaction density (e.g., 1.50 g/cm$^3$ to 1.90 g/cm$^3$) may be set, and the roller pressing may be performed under a relatively high compaction condition (e.g., setting a rotation speed of the roller pressing machine to range from 10 m/min to 40 m/min and a pressure applied to the graphite to range from 800 MPa to 1,500 MPa). Since the first structural stability coefficient X1 of the graphite according to the embodiments of the present disclosure ranges from 0.9 to 1.8, which can meet the requirements of the roller pressing operation for structural stability level of the graphite, the above-mentioned negative electrode plate can provide a high level of compaction density while ensuring the structural stability of the graphite, thereby advantageously enabling a battery assembled using the negative electrode plate to exhibit a high energy density.

In a fourth aspect, embodiments of the present disclosure provide a secondary battery. The secondary battery includes a positive electrode plate, a negative electrode plate, a separator, and an electrolyte. The separator is disposed between the positive electrode plate and the negative electrode plate to form a cell, and the electrolyte is injected in the cell. The negative electrode plate includes a negative electrode current collector and a negative electrode active material layer disposed on at least one surface of the negative electrode current collector. The negative electrode active material layer includes the graphite according to the first aspect of the present disclosure or the graphite prepared by the method according to the second aspect of the present disclosure.

Further, the electrolyte includes a lithium salt, an organic solvent, and an additive. The additive includes a sulfonate compound. A mass fraction W of the sulfonate compound in the electrolyte satisfies 0.2%≤W/X1≤1.0%.

Controlling W/X1 within the above-mentioned range can further advantageously optimize an SEI film-forming effect through a synergistic effect of the graphite and the sulfonate compound, thereby better reducing initial-efficiency loss and improving the cycling performance of the battery.

First, during preparation of the negative electrode plate, the graphite, as the negative electrode active material, may expose more active reaction sites subsequent to the roller pressing. Meanwhile, the sulfonate compound has a characteristic of low film-forming resistance, making it more likely to form components such as lithium sulfide with low resistance on a negative electrode surface during battery cycling, thereby forming a corresponding protective film to prevent further reactions between the active reaction sites of the graphite and the electrolyte.

Second, when the first structural stability coefficient X1 of the graphite ranges from 0.9 to 1.8, due to its excellent structural stability level, intercalation and deintercalation of lithium ions during charge and discharge are less likely to cause structural collapse and damage of the graphite. At the same time, the graphite particles have a more rounded morphology, resulting in less lithium-ion consumption for the film formation and a reduced irreversible capacity, and thus making the SEI film formation more uniform and stable. Based on such structural characteristics of the graphite and in combination with the sulfonate compound additive in the above-mentioned proportion, a uniform and dense SEI film can be formed in a shorter period of time. Therefore, the film-forming effect of SEI film can be further optimized through the synergistic effect of the graphite and the sulfonate compound.

Further, W ranges from 0.1% to 1.0%. Exemplarily, W is 0.1%, 0.2%, 0.3%, 0.5%, 0.7%, 0.8%, or 1.0%.

Optionally, the sulfonate compound includes at least one of 1,3-propanesultone, 1,4-butanesultone, or methylene methanedisulfonate.

In a fifth, embodiments of the present disclosure also provide an energy storage device 10. The energy storage device 10 includes the secondary battery according to the fourth aspect of the present disclosure.

Electrochemical energy storage is described as an example. Embodiments of the present disclosure provide an energy storage device 10. The energy storage device 10 is provided with a set of chemical batteries and primarily utilizes chemical elements within the batteries as energy storage medium. The charge and discharge process is accompanied by a chemical reaction or a change of the energy storage medium. In simple terms, electrical energy generated by wind energy and solar energy are stored in the chemical batteries. During peak demand periods for external electrical energy use, stored electrical energy is released for use or transferred to areas with electricity shortage for use.

Currently, energy storage (i.e., the storage of energy) has a wide range of application scenarios, including generation-side energy storage, grid-side energy storage, and consumption-side energy storage. Correspondingly, types of the energy storage device 10 include the followings.

(1) Large-scale energy storage power stations applied to a wind power and photovoltaic power station side. They can assist renewable energy power generation in meeting grid connection requirements while improving a utilization rate of renewable energy. As a high-quality active/reactive power regulation power source on the power supply side, the energy storage power stations can achieve load matching of electrical energy in terms of time and space, enhancing a renewable energy integration capacity, reducing an instantaneous power fluctuation, and mitigating an impact on a power grid. As a result, a problem of new energy power generation integration can be mitigated, and it is of great significance in power grid system backup, alleviation of a power supply pressure during peak load, and peak shaving and frequency modulation.

(2) Energy storage containers applied to a power grid side. They have primary functions including peak shaving, frequency modulation, and mitigation of power grid congestion. In terms of the peak shaving, the energy storage containers can achieve peak shaving and valley filling of electrical loads. That is, an energy storage battery is charged during off-peak load period, and stored electrical energy is released during a peak load period, thereby achieving a balance between power generation and integration.

(3) Small-scale energy storage cabinets applied to a user side. The have primary functions including self-generation and self-consumption of electricity, peak-valley price difference arbitrage, capacity cost management, and an improvement in power supply reliability. According to different application scenarios, user-side energy storage may be classified into industrial and commercial energy storage cabinets, residential energy storage devices, energy storage charging piles, etc., which are generally used in conjunction with distributed photovoltaics. Industrial and commercial users can utilize energy storage for the peak-valley price difference arbitrage and the capacity cost management. In a power market implementing time-of-use pricing, by charging the energy storage system 100 during off-peak periods and discharging the energy storage system 100 during peak periods, the peak-valley price difference arbitrage is achieved, thereby reducing electricity costs. In addition, industrial enterprises subject to two-part tariffs can utilize the energy storage system 100 to store energy during off-peak load periods and discharge during peak load periods, thereby reducing a peak power demand and a declared maximum demand to achieve a goal of lowering capacity charges. A residential photovoltaic-plus-storage system can improve a level of the self-generation and self-consumption of the electricity. High electricity prices and poor power supply stability have driven a demand for residential photovoltaic installations. Considering that photovoltaic power is generated during the day, while users generally have higher loads at night, configuring energy storage can better utilize photovoltaic power, thereby improving the level of the self-generation and self-consumption of the electricity while reducing the electricity costs. In addition, energy storage is needed in fields such as communication base stations and data centers for backup power.

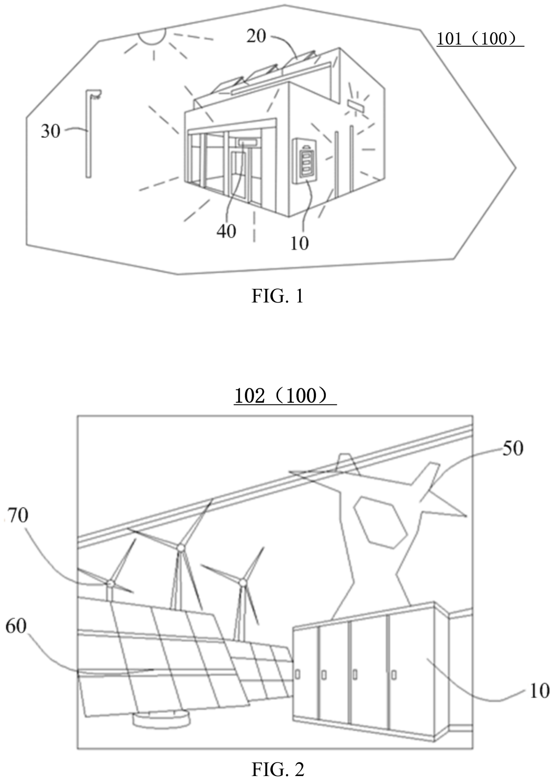

Referring to FIG. 1, FIG. 1 is a schematic structural view of a residential energy storage system 101 according to an embodiment of the present disclosure. The present disclosure provides a residential energy storage system 101. The residential energy storage system 101 includes an electrical energy conversion device 20 (a photovoltaic panel), a first user load 30 (a streetlight), a second user load 40 (such as an air conditioner and other household appliances), and the energy storage device 10. The energy storage device 10 is a small-scale energy storage box that can be wall-mounted on an outdoor wall. Specifically, the photovoltaic panel can convert solar energy into electrical energy during the off-peak periods, and the energy storage device 10 is configured to store the electrical energy and supply the electrical energy to streetlights and household appliances during the peak periods or provide power in case of power grid interruption/ outage.

Referring to FIG. 2, FIG. 2 is a schematic structural view of a commercial energy storage system 102 according to an embodiment of the present disclosure. The embodiment shown in FIG. 2 of the present disclosure is described using a shared energy storage scenario on a power generation/distribution side as an example. The energy storage device 10 of the present disclosure is not limited to the energy storage scenario on the power generation/distribution side.

The present disclosure provides a commercial energy storage system 102. The commercial energy storage system 102 includes a high-voltage cable 50, a first electrical energy conversion device 60, a second electrical energy conversion device 70, and the energy storage device 10 provided in the present disclosure. During power generation, the first electrical energy conversion device 60 and the second electrical energy conversion device 70 are configured to convert other forms of energy sources into electrical energy, and the first electrical energy conversion device 60 and the second electrical energy conversion device 70 are connected to a high-voltage cable and available for use on the user side of distribution network. When electrical load is relatively low, and when power generation of the first electrical energy conversion device 60 and the second electrical energy conversion device 70 is in surplus, excess generated electrical energy is stored in the energy storage device 10, thereby reducing a wind curtailment rate and a solar curtailment rate and improving the problem of the renewable energy integration. When the electrical load is high, the power grid issues an instruction to transmit the electrical energy stored in the energy storage device 10 to supply the user side in grid-connected mode in conjunction with the high-voltage cable 50, providing various services such as peak shaving, frequency regulation, and backup for power grid operation. As a result, the peak shaving effect of the power grid can be fully exerted, and the peak shaving and valley filling of the power grid can be promoted. In this way, a power supply pressure of the power grid can be alleviated.

Optionally, the first electrical energy conversion device 60 and the second electrical energy conversion device 70 are configured to convert at least one of solar energy, light energy, wind energy, thermal energy, tidal energy, biomass energy, or mechanical energy into the electrical energy.

A plurality of energy storage devices 10 may be provided and connected to each other in series or in parallel. The plurality of energy storage devices 10 are supported by an isolation plate (not shown in the figures) and electrically connected to each other. In this embodiment, "the plurality of" refers to two or more. An energy storage box may be further provided at an exterior of the energy storage device 10 and is configured to accommodate the energy storage device 10.

Optionally, the energy storage device 10 may include, but is not limited to, a battery module, a battery pack, or a battery system. The actual application form of the energy storage device 10 according to the embodiments of the present disclosure may be, but is not limited to, the listed products, and may also be other application forms. The application form of the energy storage device 10 is not strictly limited in the embodiments of the present disclosure. The energy storage device 10 is described using a multi-cell battery as an example in the embodiments of the present disclosure. When the energy storage device 10 includes the battery cell, the battery cell may be at least one of a cylindrical cell or a prismatic cell.

The solutions of the present disclosure are further described below with reference to specific examples and experimental data.

**Example 1**

**<Graphite>**

The graphite in Example 1 was prepared by the following method.

Petroleum coke was coarsely crushed and ground for 1 hour to 5 hours to obtain a coarse material, where the coarse material had a volume median particle size Dv0'.

The coarse material was finely crushed at a power ranging from 10 Hz to 50 Hz to obtain an aggregate, in which the aggregate had a volume median particle size Dv0.

Granulation was performed on the aggregate using asphalt as an additive to obtain a first material, in which the first material had a first volume median particle size Dv1. The asphalt had a softening point ranging from 200°C to 250°C, and an amount of the asphalt ranged from 0.01 wt% to 5 wt%.

The first material was shaped to obtain a second material, in which the second material had a second volume median particle size Dv2 and a tap density greater than or equal to 0.5 g/cm$^3$.

Pre-carbonization was performed on the second material to obtain a third material, and the third material had a tap density greater than or equal to 0.7 g/cm$^3$. A temperature of the pre-carbonization treatment ranged from 700°C to 1,500°C, and a duration of the pre-carbonization treatment ranged from 8 hours to 60 hours.

Graphitization was performed on the third material to obtain a fourth material, and the fourth material had a tap density greater than or equal to 0.8 g/cm$^3$. The graphitization treatment was carried out in an Atchison furnace, a power of the graphitization treatment was greater than or equal to 500 kW, a temperature of the graphitization treatment ranged from 2,000°C to 3,000°C, and a thermostatic duration ranged from 12 hours to 24 hours.

The fourth material was sieved to obtained the graphite.

The volume median particle size after each step of the treatment and parameters of the graphite are shown in Table 1 and Table 2 below.

<Battery assembly>

Preparation of positive electrode plate: Lithium iron phosphate, a conductive agent acetylene black, and a binder polyvinylidene fluoride at a mass ratio of 96:2:2 were dispersed in N-methylpyrrolidone solvent and mixed uniformly to obtain a positive electrode slurry with a solid content of 60wt%. The positive electrode slurry was uniformly coated onto a positive electrode current collector aluminum foil, followed by drying and cold pressing, to obtain the positive electrode plate.

Preparation of negative electrode plate: Graphite, a conductive agent, sodium carboxymethyl cellulose, and styrene-butadiene rubber at a mass ratio of 96:1:1:2 were dispersed in deionized water and mixed uniformly to obtain a negative electrode slurry with a solid content of 50wt%. The negative electrode slurry was coated onto a negative electrode current collector using a die extrusion coater and dried to obtain a negative electrode plate not subjected to roller pressing. The roller pressing was performed on the negative electrode plate not subjected to roller pressing at a set compaction density using a roller pressing machine to obtain the negative electrode plate. The graphite was the graphite prepared as described above. Roller pressing conditions for the roller pressing machine included: performing the roller pressing by applying a pressure ranging from 800 MPa to 1,500 MPa at a rotation speed ranging from 10 m/min to 40 m/min.

Separator: A PP (Polypropylene) porous polymer film was used.

Preparation of electrolyte: In an argon-atmosphere glove box with a moisture content less than or equal to 1 ppm, ethylene carbonate (EC) and diethyl carbonate (DEC) were mixed at a volume ratio of 3:7 to obtain a mixed solvent. Then, dry lithium salt $LiPF_6$ was added to the mixed solvent to prepare an electrolyte with a concentration of 1mol/L.

Assembly of secondary battery: The negative electrode plate, the separator, and the negative electrode plate were sequentially stacked. The separator was placed between the positive electrode plate and the negative electrode plate to isolate the positive electrode plate and the negative electrode plate. They were wounded to obtain a bare cell, and tabs were welded. The bare cell was placed in an outer packaging, and the electrolyte was injected in the bare cell, followed by encapsulating, standing, formation, shaping, and capacity testing, thereby finally preparing the secondary battery.

## Example 2 to Example 3

Example 2 to Example 3 differed from Example 1 in that the preparation process of the graphite was adjusted to obtain a different volume median particle size of the material after each step of the treatment and different parameters of the graphite.

## Example 4 to Example 7

Example 4 to Example 7 differed from Example 1 to Example 3 in that 1,3-propanesultone was additionally added to the electrolyte, and its mass fraction in the electrolyte was W.

## Example 8 to Example 10

Example 8 to Example 10 differed from Example 1 in that the preparation process of the graphite was adjusted to obtain a different volume median particle size of the material after each step of the treatment and different parameters of the graphite.

## Example 11

Example 11 differed from Example 1 in that the raw coke in this example was needle coke, and 1,4-butanesultone was additionally added to the electrolyte.

## Comparative Example 1 to Comparative Example 2

Comparative Example 1 to Comparative Example 2 differed from Example 1 in that the preparation process of the graphite was adjusted to obtain a different volume median particle size of the material after each step of the treatment and different parameters of the graphite.

## Comparative Example 3 to Comparative Example 4

Comparative Example 3 to Comparative Example 4 differed from Comparative Example 1 and Comparative Example 2 in that 1,3-propanesultone was additionally added to the electrolyte, and its mass fraction in the electrolyte was W.

<Test>

(1) Test for particle size

The particle size was measured using a laser diffraction particle size analyzer (Malvern Mastersizer 3000) in accordance with a laser diffraction method for a particle size distribution (GB/T19077-2016). This method was adopted to measure the particle size of graphite prior to and subsequent to the roller pressing, as well as the particle size of the materials at each step during the preparation of the graphite.

The graphite subsequent to the roller pressing can be obtained as a test sample by the following method. The secondary battery (discharged to 2.0 V) in the above-mentioned Examples and Comparative Examples in a fully discharged state was taken and disassembled to extract the negative electrode plate. 30 g of the negative electrode plate was immersed in 200 mL of pure water and stirred gently for 1 minute to ensure that the negative electrode active material on the surface of the negative electrode current collector copper foil was fully peeled off, and then the copper foil was taken out. The solution was stirred for 30 minutes to ensure that the negative electrode active material was completely dispersed without visible agglomerated particles inside the solution. The solution was left to stand for 6 hours such that most of the solid substances precipitated at a bottom of the container, and the supernatant solution was poured out. 200 mL of water was added again, and the mixture was stirred for 30 minutes and was left to stand for 6 hours. Then, the solution was poured out. After repeating the above-mentioned steps three times, the lower precipitate was placed in an oven at 60°C or above for 6 hours until it was dried. The bulk precipitate was ground in a mortar for more than 15 minutes until no obvious agglomerates existed, thereby obtaining the negative electrode active material as a uniform powder.

The results are shown in Table 1 and Table 2.

[Table 1] Volume median particle size after each step of preparation of graphite in Examples and Comparative Examples

| Graphite | Dv0' ($\mu$m) | Dv0 ($\mu$m) | Dv1 ($\mu$m) | Dv2 ($\mu$m) |
|---|---|---|---|---|
| Example 1 | 19.4 | 8.1 | 15.5 | 12.9 |
| Example 2 | 18.2 | 7.9 | 14.0 | 11.8 |
| Example 3 | 17 | 7.5 | 18 | 12.5 |
| Example 4 | 19.4 | 8.1 | 15.5 | 12.9 |
| Example 5 | 19.4 | 8.1 | 15.5 | 12.9 |
| Example 6 | 18.2 | 7.9 | 14.0 | 11.8 |
| Example 7 | 17 | 7.5 | 18 | 12.5 |
| Example 8 | 20.3 | 8.1 | 18.5 | 13.5 |
| Example 9 | 18.5 | 8.8 | 19.6 | 15.3 |
| Example 10 | 18.0 | 7.6 | 14.8 | 12.0 |
| Example 11 | 18.9 | 8.3 | 15.7 | 13.5 |
| Comparative Example 1 | / | 10.0 | 15.5 | 10.5 |
| Comparative Example 2 | / | 11.7 | 18.9 | 16.4 |
| Comparative Example 3 | / | 10.0 | 15.5 | 10.5 |
| Comparative Example 4 | / | 11.7 | 18.9 | 16.4 |

[Table 2] Structural stability coefficient of graphite in Examples and Comparative Examples

| Graphite | Prior to roller pressing | | | Subsequent to roller pressing | | | X1 | X2 |
|---|---|---|---|---|---|---|---|---|
| | Dv90 ($\mu$m) | Dv50 ($\mu$m) | Dv10 ($\mu$m) | Dv90' ($\mu$m) | Dv50' ($\mu$m) | Dv10' ($\mu$m) | | |
| Example 1 | 24.6 | 12.9 | 6.1 | 18.9 | 10.1 | 5.2 | 1.33 | 1.35 |
| Example 2 | 22.9 | 11.8 | 5.2 | 21.1 | 10.9 | 4.8 | 1.09 | 1.09 |
| Example 3 | 21.6 | 12.5 | 6.7 | 20.1 | 10.1 | 4.5 | 0.91 | 0.96 |
| Example 4 | 24.6 | 12.9 | 6.1 | 18.9 | 10.1 | 5.2 | 1.33 | 1.35 |
| Example 5 | 24.6 | 12.9 | 6.1 | 18.9 | 10.1 | 5.2 | 1.33 | 1.35 |
| Example 6 | 22.9 | 11.8 | 5.2 | 21.1 | 10.9 | 4.8 | 1.09 | 1.09 |
| Example 7 | 21.6 | 12.5 | 6.7 | 20.1 | 10.1 | 4.5 | 0.91 | 0.96 |
| Example 8 | 25.6 | 13.5 | 6.9 | 25.0 | 12.9 | 5.1 | 1.00 | 0.94 |
| Example 9 | 25.4 | 15.3 | 8.4 | 24.0 | 14.8 | 5.6 | 1.10 | 0.92 |
| Example 10 | 23.5 | 12.0 | 6.6 | 22.3 | 11.5 | 4.2 | 1.06 | 0.93 |
| Example 11 | 25.8 | 13.5 | 6.8 | 22.2 | 10.9 | 6.1 | 1.09 | 1.18 |
| Comparative Example 1 | 17 | 10.5 | 5.1 | 16.8 | 9.2 | 3.2 | 0.86 | 0.88 |

(continued)

| Graphite | Prior to roller pressing | | | Subsequent to roller pressing | | | X1 | X2 |
|---|---|---|---|---|---|---|---|---|
| | Dv90 | Dv50 | Dv10 | Dv90' | Dv50' | Dv10' | | |
| | (μm) | (μm) | (μm) | (μm) | (μm) | (μm) | | |
| Comparative Example 2 | 28.2 | 16.4 | 7.2 | 27.6 | 14.2 | 5.2 | 0.88 | 0.94 |
| Comparative Example 3 | 17 | 10.5 | 5.1 | 16.8 | 9.2 | 3.2 | 0.86 | 0.88 |
| Comparative Example 4 | 28.2 | 16.4 | 7.2 | 27.6 | 14.2 | 5.2 | 0.88 | 0.94 |

(2) Compaction density

1 g of graphite powder was added to a mold with a diameter of 13 mm. The mold was placed in a press machine and pre-pressured at 30 kN for 30 seconds, and then the pressure was released. Then, the pressure was gradually applied to 50 kN from 5 kN. The pressure was held for 10 seconds and then released. A mass and volume of the pressed cylinder were measured. Compaction density=sample mass/sample volume.

(3) Tap density

The prepared sample was loaded into a graduated cylinder, and the graduated cylinder was fixed on a mechanical vibration device (instrument model: Dandong Bettersize BT-313). A vibration motor drove the mechanical vibration device to perform vertical up-and-down vibration. The graduated cylinder containing the sample vibrated rhythmically with the mechanical vibration device. When the number of vibrations reached a set number, the mechanical vibration device stopped vibrating, and a volume of the graduated cylinder was read. According to the definition of density: density=mass/volume, the tap density of the positive electrode active material/negative electrode active material after tapping was calculated.

(4) Specific surface area

The test was conducted using the nitrogen adsorption specific surface area analysis method, in accordance with GB/T 19587-2017.

(5) Gram capacity

The above-mentioned negative electrode plate, a separator, a lithium metal disc, and an electrolyte were assembled into a CR 2032 button cell. The assembled button cell was tested on a test system using the following test method. (a) After the button cell was left to stand for 4 hours, it was discharged to 0.005 V at a constant current of 0.1 C and left to stand for 10 minutes. (b) The cell was then discharged to 0.005 V at a current of 0.05 mA and left to stand for 10 minutes. (c) The cell was then discharged to 0.005 V at a current of 0.01 mA and left to stand for 10 minutes. (d) The cell was charged to 2 V at a current density of 0.1 C, and the gram capacity obtained in the final charging process was taken as a negative electrode gram capacity.

(6) Test for cycling performance of battery

The secondary batteries of Examples and Comparative Examples were subjected to repeated charge and discharge cycles according to the following steps, and a discharge capacity retention rate of the secondary battery was calculated.

First, at an ambient temperature of 25°C, the battery was subjected to the first charge and discharge cycle. The battery was subjected to constant power charging at a charging power of 0.5 P until an upper limit voltage of 3.65 V was reached, and then were subjected to constant voltage charging. Then, the battery was subjected to constant power discharging at a discharging power of 0.5 P until the final voltage was 2.5 V. The above process was repeated twice, and the discharge capacity of the second cycle was recorded. Then, 300 charge and discharge cycles were performed, and the discharge capacity of the 300th cycle was recorded.

The capacity retention rate after the 300 cycles=(the discharge capacity of the 300th cycle/the discharge capacity of the second cycle)×100%.

The results are shown in Table 3 below.

[Table 3] Graphite and battery performance of Examples and Comparative Examples

| Graphite | Compaction density (g/cm³) | Tap density (g/cm³) | Specific surface area (m²/g) | Gram capacity (mAh/g) | W (%) | W/X1 | Capacity retention rate (%) |
|---|---|---|---|---|---|---|---|
| Example 1 | 1.84 | 1.08 | 1.73 | 352.8 | / | / | 103.48 |
| Example 2 | 1.78 | 1.05 | 1.74 | 349.9 | / | / | 103.36 |
| Example 3 | 1.70 | 1.02 | 1.49 | 346.5 | / | / | 103.45 |
| Example 4 | 1.84 | 1.08 | 1.73 | 352.8 | 0.50 | 0.38 | 103.72 |
| Example 5 | 1.84 | 1.08 | 1.73 | 352.8 | 1.00 | 0.75 | 104.12 |
| Example 6 | 1.78 | 1.05 | 1.74 | 349.9 | 0.40 | 0.37 | 103.51 |
| Example 7 | 1.70 | 1.02 | 1.49 | 346.5 | 0.70 | 0.77 | 103.58 |
| Example 8 | 1.81 | 1.06 | 1.27 | 351.7 | / | / | 103.31 |
| Example 9 | 1.74 | 1.05 | 1.67 | 353.4 | / | / | 103.27 |
| Example 10 | 1.82 | 1.09 | 1.76 | 347.5 | / | / | 103.12 |
| Example 11 | 1.87 | 1.06 | 1.64 | 356.7 | / | / | 103.55 |
| Comparative Example 1 | 1.70 | 1.03 | 1.74 | 349.9 | / | / | 101.23 |
| Comparative Example 2 | 1.68 | 1.14 | 1.59 | 346.8 | / | / | 102.04 |
| Comparative Example 3 | 1.70 | 1.03 | 1.74 | 349.9 | 0.30 | 0.35 | 101.67 |
| Comparative Example 4 | 1.68 | 1.14 | 1.59 | 346.8 | 0.90 | 1.02 | 102.87 |

A comparison of Example 1 to Example 3 with Comparative Example 1 to Comparative Example 2 shows that, when the first structural stability coefficient of the graphite ranged from 0.9 to 1.8, the battery using the graphite as the negative electrode active material exhibited superior cycling performance.

A comparison of Example 1 to Example 3 with Example 4 to Example 7 shows that, when the first structural stability coefficient of the graphite ranged from 0.9 to 1.8, the addition of the sulfonate compound to the electrolyte of the battery can further advantageously improve the cycling performance of the battery. A comparison of Example 4 with Example 5 shows that, when the same type of graphite but different amounts of sulfonate compound were used in the batteries, the cycling performance of the battery can be advantageously improved as the amount of sulfonate compound increased. In addition, A further comparison of Example 4 to Example 7 with Comparative Example 1 to Comparative Example 4 shows that, when W/X1 was controlled between 0.2% and 1.0%, the performance of the battery was further advantageously enhanced.

A comparison of Example 1 to Example 3 with Example 8 to Example 10 shows that, the cycling performance of the batteries of Example 1 to Example 3 was superior. Therefore, when the graphite simultaneously satisfied the first stability coefficient in the range of 0.9 to 1.8 and the second stability coefficient in the range of 0.95 to 2, the cycling performance of the battery was advantageously enhanced.

The technical solutions disclosed in the embodiments of the present disclosure have been described in detail above. Specific examples are used herein to illustrate the principles and implementations of the present disclosure. The description of the above embodiments is only used to facilitate understanding of the method and a core idea thereof of the present disclosure. In addition, for those skilled in the art, according to the concept of the present disclosure, changes can be made to the specific implementations and the scope of application. In summary, the content of the specification should not be construed as a limitation to the present disclosure.

**Claims**

1.   A graphite, having a first structural stability coefficient X1, the first structural stability coefficient X1 satisfying $X1 = (Dv90-Dv50)/(Dv90'-Dv50')$, and $0.90 \leq X1 \leq 1.80$, where:

Dv90 represents a particle size value prior to roller pressing at which 90% volume of particles of the graphite are smaller;

Dv50 represents a particle size value prior to the roller pressing at which 50% volume of the particles of the graphite are smaller;

Dv90' represents a particle size value subsequent to the roller pressing at which 90% volume of the particles of the graphite are smaller; and

Dv50' represents a particle size value subsequent to the roller pressing at which 50% volume of the particles of the graphite are smaller.

2. The graphite according to claim 1, wherein the roller pressing is performed by applying a pressure ranging from 800 MPa to 1,500 MPa on the graphite at a rotation speed ranging from 10 m/min to 40 m/min; and/or

the graphite has a compaction density ranging from 1.50 $g/cm^3$ to 1.90 $g/cm^3$.

3. The graphite according to claim 1, wherein:

$$17 \ \mu m \leq Dv90 \leq 26 \ \mu m;$$

and/or

$$10 \ \mu m \leq Dv50 \leq 15.5 \ \mu m;$$

and/or

$$17 \ \mu m \leq Dv90' \leq 25 \ \mu m;$$

and/or

$$9.5 \ \mu m \leq Dv50' \leq 15 \ \mu m.$$

4. The graphite according to claim 1, further having a second structural stability coefficient X2, the second structural stability coefficient X2 satisfying X2=(Dv90-Dv10)/(Dv90'-Dv10'), and 0.95≤X2≤2, where:

Dv10 represents a particle size value prior to the roller pressing at which 10% volume of the particles of the graphite are smaller; and

Dv10' represents a particle size value subsequent to the roller pressing at which 10% volume of the particles of the graphite are smaller.

5. The graphite according to claim 4, wherein:

$$5 \ \mu m \leq Dv10 \leq 9.5 \ \mu m;$$

5 $\mu$m≤Dv10≤9.5 $\mu$m; and/or

$$4 \ \mu m \leq Dv10' \leq 7.5 \ \mu m.$$

6. The graphite according to any one of claims 1 to 5, wherein:

the graphite has a tap density ranging from 1.0 $g/cm^3$ to 1.2 $g/cm^3$; and/or
the graphite has a specific surface area ranging from 1.1 $m^2/g$ to 1.6 $m^2/g$; and/or
the graphite has a gram capacity ranging from 340 mAh/g to 370 mAh/g.

7. A method for preparing the graphite according to any one of claims 1 to 6, the method comprising:

crushing raw coke to obtain an aggregate, wherein the aggregate has a volume median particle size Dv0 ranging from 6.0 $\mu$m to 9.0 $\mu$m;

performing granulation on the aggregate to obtain a first material, wherein the first material has a first volume median particle size Dv1 satisfying 1.7≤Dv1/Dv0≤2.6;

shaping the first material to obtain a second material, wherein the second material has a second volume median particle size Dv2 satisfying 1.5≤Dv2/Dv0≤1.8;

performing pre-carbonization on the second material to obtain a third material;

performing graphitization on the third material to obtain a fourth material; and

sieving the fourth material to obtain the graphite.

8. The method for preparing the graphite according to claim 7, wherein:

Dv1 ranges from 10.0 $\mu$m to 22.0 $\mu$m; and/or

Dv2 ranges from 11.0 $\mu$m to 16.0 $\mu$m; and/or

the second material has a tap density greater than or equal to 0.5 $g/cm^3$; and/or

the third material has a tap density greater than or equal to 0.7 $g/cm^3$; and/or

the fourth material has a tap density greater than or equal to 0.8 $g/cm^3$.

9. The method for preparing the graphite according to claim 7, wherein the crushing the raw coke to obtain the aggregate comprises:

coarsely crushing the raw coke to obtain a coarse material; and

finely crushing the coarse material to obtain the aggregate, and

wherein the coarse material has a volume median particle size Dv0' ranging from 13.0 $\mu$m to 25.0 $\mu$m, satisfying 2.1≤Dv0'/Dv0≤2.8.

10. A negative electrode plate, comprising:

a negative electrode current collector; and

a negative electrode active material layer disposed on at least one surface of the negative electrode current collector, wherein the negative electrode active material layer comprises the graphite according to any one of claims 1 to 6 or the graphite prepared by the method according to any one of claims 7 to 9.

11. A secondary battery, comprising:

a positive electrode plate;

the negative electrode plate according to claim 10;

a separator, wherein the separator is disposed between the positive electrode plate and the negative electrode plate to form a cell; and

an electrolyte injected in the cell.

12. The secondary battery according to claim 11, wherein the electrolyte comprises a lithium salt, an organic solvent, and an additive, wherein the additive comprises a sulfonate compound, a mass fraction W of the sulfonate compound in the electrolyte satisfying 0.2%≤W/X1≤1.0%.

13. An energy storage device, comprising the secondary battery according to any one of claims 11 to 12.

FIG. 1

101 （100）

102 （100）

FIG. 2

Europäisches
Patentamt
European
Patent Office
Office européen
des brevets

# EUROPEAN SEARCH REPORT

**Application Number**

EP 26 15 2135

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 174 990 A1 (CONTEMPORARY AMPEREX TECHNOLOGY CO LTD [CN]) 3 May 2023 (2023-05-03) | 1-6 | INV. C01B32/20 C01B32/205 |
| Y | * paragraph [0001] - paragraph [0106]; claims 1-13; example 2; table 2 * | 7-13 | C01B32/215 H01M4/133 H01M4/583 |
| Y | CN 115 490 228 A (HUNAN CHENYU FUJI NEW ENERGY TECH CO LTD) 20 December 2022 (2022-12-20) * paragraph [0036] - paragraph [0044]; claims 1-10 * | 7-13 | C01B32/21 |
| A | CN 107 534 149 A (SHOWA DENKO KK) 2 January 2018 (2018-01-02) * claims 1-4; table 1 * | 1-13 | |
| A | MEYER CHRIS ET AL: "Process modeling of the electrode calendering of lithium-ion batteries regarding variation of cathode active materials and mass loadings", JOURNAL OF ENERGY STORAGE, vol. 18, 1 August 2018 (2018-08-01), pages 371-379, XP093405138, NL ISSN: 2352-152X, DOI: 10.1016/j.est.2018.05.018 * the whole document * | 1-13 | **TECHNICAL FIELDS SEARCHED (IPC)**<br><br>C01B<br>H01M |

The present search report has been drawn up for all claims

| Place of search | Date of completion of the search | Examiner |
|---|---|---|
| The Hague | 11 June 2026 | Alex, Jennifer |

EPO FORM 1503 03.82 (P04C01)

## ANNEX TO THE EUROPEAN SEARCH REPORT
## ON EUROPEAN PATENT APPLICATION NO.

EP 26 15 2135

This annex lists the patent family members relating to the patent documents cited in the above-mentioned European search report.
The members are as contained in the European Patent Office EDP file on
The European Patent Office is in no way liable for these particulars which are merely given for the purpose of information.

11-06-2026

| Patent document cited in search report | | Publication date | Patent family member(s) | | Publication date |
|---|---|---|---|---|---|
| EP 4174990 | A1 | 03-05-2023 | CN | 116648428 A | 25-08-2023 |
| | | | EP | 4174990 A1 | 03-05-2023 |
| | | | JP | 7579874 B2 | 08-11-2024 |
| | | | JP | 2023545335 A | 30-10-2023 |
| | | | KR | 20230035215 A | 13-03-2023 |
| | | | US | 2023183073 A1 | 15-06-2023 |
| | | | WO | 2023028894 A1 | 09-03-2023 |
| CN 115490228 | A | 20-12-2022 | NONE | | |
| CN 107534149 | A | 02-01-2018 | CN | 107534149 A | 02-01-2018 |
| | | | JP | WO2016181960 A1 | 01-03-2018 |
| | | | US | 2018069260 A1 | 08-03-2018 |
| | | | WO | 2016181960 A1 | 17-11-2016 |

EPO FORM P0459

For more details about this annex : see Official Journal of the European Patent Office, No. 12/82